# EUROPÄISCHE PATENTSCHRIFT

(11) **EP 3 899 863 B1**
(45) Veröffentlichungstag und Bekanntmachung des Hinweises auf die Patenterteilung: **03.12.2025**
(21) Anmeldenummer: 19789636.8
(22) Anmeldetag: 14.10.2019
(51) Int. Cl.: G06T 7/00

(54) **COMPUTER-IMPLEMENTIERTES VERFAHREN ZUR ANALYSE VON MESSDATEN AUS EINER MESSUNG EINES OBJEKTES**
COMPUTER-IMPLEMENTED METHOD FOR ANALYSING MEASUREMENT DATA FROM A MEASUREMENT OF AN OBJECT
PROCÉDÉ MIS EN OEUVRE PAR ORDINATEUR POUR L'ANALYSE DE DONNÉES DE MESURE À PARTIR D'UNE MESURE D'UN OBJET

(30) Priorität: 20.12.2018 DE 102018133092
(43) Veröffentlichungstag der Anmeldung: 27.10.2021
(73) Patentinhaber: Volume Graphics GmbH, 69115 Heidelberg (DE)
(72) Erfinder: FLESSNER, Matthias, 69115 Heidelberg (DE); REINHART, Christof, 69115 Heidelberg (DE); GÜNTHER, Thomas, 69115 Heidelberg (DE)
(74) Vertreter: Patentanwälte Olbricht Buchhold Keulertz
(86) Internationale Anmeldenummer: PCT/EP2019/077768
(87) Internationale Veröffentlichungsnummer: WO 2020/126150

(56) Entgegenhaltungen:
- WO-A1-2018/217903
- EROL SARIGULA ET AL: "An Interactive Machine-Learning Approach for Defect Detection in Computed Tomography (CT) Images of Hardwood Logs", PROCEEDINGS OF SCAN TECH 2005 INTERNATIONAL CONFERENCE, 1 January 2005 (2005-01-01), pages 1 - 27, XP055646806, Retrieved from the Internet <URL:https://pdfs.semanticscholar.org/e4d3/df1e7f4ba7537fa4fac8f598b061de4d18bc.pdf> [retrieved on 20191127]
- C REINHART ET AL: "MODERN VOXEL BASED DATA AND GEOMETRY ANALYSIS SOFTWARE TOOLS FOR INDUSTRIAL CT", 1 January 2004 (2004-01-01), pages 1 - 8, XP055479038, Retrieved from the Internet <URL:http://www.ndt.net/article/wcndt2004/pdf/radiography/566_reinhart.pdf> [retrieved on 20180528]

## Beschreibung

Die Erfindung betrifft ein computer-implementiertes Verfahren und Computerprogrammprodukt zur Analyse von Messdaten aus einer Messung eines Objektes, wobei die Analyse bewertet, ob das Objekt einem Soll-Zustand entspricht.

Zur Qualitätskontrolle von Objekten können zerstörungsfreie Messungen durchgeführt werden, um die von außen nicht sichtbare Struktur der Objekte zu erfassen. Die Objekte können zum Beispiel Bauteile sein, die zu größeren Objekten zusammengefasst werden. Wenn die zerstörungsfreie Messung ergibt, dass Defekte in dem Bauteil vorhanden sind, wie zum Beispiel Poren, Lunker, Einschlüsse, Bereiche erhöhter Porosität oder Gefügeauflockerungen, usw., muss beurteilt werden, ob die Funktionsfähigkeit des Objekts durch diese Defekte beeinträchtigt wird. Dabei wird eine Konformitäts-Entscheidung getroffen, die beurteilt, ob das Objekt in Ordnung oder nicht in Ordnung ist und ob es somit eine Konformität mit den in der technischen Zeichnung, in der Produktspezifikation oder an anderen Stellen definierten Anforderungen aufweist. Besondere Relevanz hat diese Qualitätskontrolle bei Objekten, welche mittels additiver Fertigung oder Gießen, z. B. Spritzguss, Druckguss oder Formguss, gefertigt wurden. Die grundsätzliche Notwendigkeit dieser Qualitätskontrolle ist allerdings unabhängig von der Fertigungsmethode des Objekts.

Aus WO 2018/217903 A1 ist ein Verfahren bekannt, bei dem ein fachkundiger Benutzer Trainingsdaten für eine Defekterkennung bei einem additiven Fertigungsverfahren bereitstellt. Mit diesen Trainingsdaten wird ein lernfähiger Algorithmus trainiert.

Es existieren automatisierbare Algorithmen, die gemäß einem durch einen Benutzer vordefinierten Kriterienkatalog beurteilen, ob ein Objekt in Ordnung ist oder nicht. Der vordefinierte Kriterienkatalog schließt allgemein von geometrischen Eigenschaften des Objektes auf die Funktionsfähigkeit des Objekts. Dies ist allerdings nur mit einer gewissen Unschärfe möglich, da in der Regel noch weitere Informationen über den Defekt relevant sind, um die Funktionsfähigkeit des Objektes zu beurteilen, welche von den Algorithmen nicht berücksichtigt werden.

Aus diesen Gründen werden die Beurteilungen der automatischen Algorithmen einem Experten zur manuellen Überprüfung vorgelegt, wenn diese Algorithmen nicht klar beurteilen können, ob relevante Defekte vorliegen und/oder wenn jeder aufgefundene Defekt sicherheitshalber durch einen Experten überprüft werden soll. Falls die Überprüfung durch den Experten ergibt, dass die Entscheidung des Algorithmus nicht korrekt sein sollte, korrigiert der Experte sie. Ebenso können dem Experten Fälle vorgelegt werden, in denen der automatische Algorithmus zu keinem eindeutigen Ergebnis gekommen ist. Beide Vorgehensweisen sind allerdings zeitaufwendig und erfordern einen relativ hohen Personaleinsatz.

Vor diesem Hintergrund liegt der vorliegenden Erfindung die objektive technische Aufgabe zugrunde, ein verbessertes Verfahren zur Analyse von Messdaten aus einer Messung eines Objektes zu schaffen.

Hauptmerkmale der Erfindung sind im Anspruch 1 und Anspruch 14 angegeben. Ausgestaltungen sind Gegenstand der Ansprüche 2 bis 13.

In einem ersten Aspekt betrifft die Erfindung ein computer-implementiertes Verfahren gemäss Anspruch 1.

Das computer-implementierte Verfahren zur Analyse von Messdaten aus einer Messung eines Objekts ermittelt automatisiert Messdaten von einer Vielzahl von Objekten. Messdaten können dabei auf Basis gleichartiger Messaufgaben ermittelt werden, d.h., dass die Objekte beispielsweise an ähnlichen Stellen, auf ähnliche Art und Weise oder zum Auffinden ähnlicher Abweichungen vermessen bzw. analysiert werden. Das Ermitteln der Messdaten kann zum Beispiel mittels bildgebenden Verfahren wie Computertomographie erfolgen, wobei andere Messverfahren damit nicht ausgeschlossen sein sollen. Hierbei kann das Ermitteln der Messdaten "inline" oder "atline" und somit begleitend zu der Fertigung erfolgen. Weiterhin kann das Ermitteln der Messdaten umfassen, dass Messdaten, beispielsweise von bereits durchgeführten Messreihen, verwendet werden. Die Messdaten der bereits durchgeführten Messreihen können z. B. von einem Datenträger oder einem anderen Speichermedium bzw. -ort geladen werden.

Aus den Messdaten für die Objekte werden automatisiert Analysedatensätze ermittelt. Die Analysedatensätze können zum Beispiel mit dem lernfähigen Algorithmus ermittelt werden, der trainiert werden soll. Erfindungsgemäß ermittelt ein anderer nicht-lernfähiger, d. h. konventioneller Algorithmus die Analysendatensätze. Ein Analysedatensatz ist dabei einem Objekt zugeordnet. Weiter umfassen die Analysedatensätze mindestens ein Analyseergebnis über die Konformität des Ist-Zustands des zugeordneten gemessenen Objekts mit dem Soll-Zustand des Objekts. Ein Analysedatensatz kann dabei eine Vielzahl von Analyseergebnissen aus unterschiedlichen Analysen zu einem Objekt umfassen. Dabei wird durch den verwendeten Algorithmus beispielsweise eine Bewertung darüber abgegeben, ob ein Bauteil sich hinsichtlich seiner Geometrie und Materialeigenschaften innerhalb der vom Konstrukteur vorgegebenen Toleranzen befindet und somit seine angedachte Funktion erfüllen kann. Zudem können die Analyseergebnisse beispielsweise Informationen darüber beinhalten, an welcher Stelle ein kritischer Defekt identifiziert wurde und/oder welche Regionen auf welche Art analysiert wurden. Weiterhin können die Analyseergebnisse einen Ausschnitt der (Roh-)Daten der Messdaten beziehungsweise eine Visualisierung des Defekts beinhalten, welche einem Benutzer eine Überprüfung ermöglicht oder vereinfacht.

Mindestens ein Teil der Analysedatensätze wird durch einen Benutzer überprüft. Dabei überprüft der Benutzer die einzelnen Analyseergebnisse in den Analysedatensätzen. Es können lediglich diejenigen Analysedatensätze zur Prüfung durch den Benutzer vorgesehen sein, deren Analyseergebnisse eine Nichtkonformität des Objektes mit dem Soll-Zustand ergeben. Alternativ können lediglich Analysedatensätze zur Prüfung vorgesehen werden, in denen keine klare Beurteilung über die Konformität des Objekts aus den Analyseergebnissen ermittelt werden kann. Dies kann zum Beispiel bedeuten, dass der verwendete Algorithmus aus den Analyseergebnissen nicht klar beurteilen kann, ob das Objekt funktionsfähig ist. In einer weiteren Alternative können alle Analysedatensätze durch den Benutzer überprüft werden. Unter der Nichtkonformität des Objekts mit dem Soll-Zustand werden Abweichungen vom Soll-Zustand, wie z. B. Defekte, verstanden.

Falls einzelne Analyseergebnisse durch den Benutzer anders beurteilt werden als in dem überprüften Analysedatensatz gespeichert ist, wird das entsprechende, anders beurteilte Analyseergebnis in dem entsprechenden überprüften Analysedatensatz geändert.

Zumindest die angepassten Analysedatensätze aus der Überprüfung durch den Benutzer werden dem lernfähigen Algorithmus übermittelt. Der lernfähige Algorithmus nutzt diese angepassten übermittelten Analysedatensätze, um sich selbst zu trainieren. Dabei ändert der lernfähige Algorithmus sich selbst auf Basis der angepassten übermittelten Analysedatensätze. Der lernfähige Algorithmus lernt damit mittels der überprüften Analysedatensätze, die Funktionsfähigkeit von Objekten, d.h. die Konformität der Objekte mit dem Soll-Zustand, anhand von Messdaten zu ermitteln und entsprechende Analyseergebnisse bereitzustellen. Der lernfähige Algorithmus kann damit aus weiteren Messdaten eigenständig Analysedatensätze erstellen, die eine geringere Überprüfungsquote durch den Benutzer aufweisen als vor dem Lernvorgang.

Die vorangegangenen Schritte können gemäß einer beispielhaften Ausführungsform nacheinander durchgeführt werden, wobei zunächst Messdaten für alle Objekte ermittelt werden, bevor eine Analyse stattfindet und die Überprüfung erst nach dem Abschluss der Analyse durchgeführt wird. In einem alternativen Beispiel kann, sofern die logischen Voraussetzungen vorliegen, zumindest eine teilweise zeitliche Überlappung der Schritte vorgesehen sein, so dass zum Beispiel während des Ermittelns der Messdaten bereits mit dem Ermitteln der Analysedatensätze für die bereits durchgeführten Messungen begonnen wird. Weiter können beispielsweise die weiteren Schritte bei Vorliegen der entsprechenden Voraussetzungen bereits während des Durchführens der vorher genannten Schritte durchgeführt werden, d. h. das Überprüfen kann beginnen, wenn entsprechende zu überprüfende Analysedatensätze während des Ermittelns der Analysedatensätze vorliegen und das Ändern des lernfähigen Algorithmus kann durchgeführt werden, sobald angefangen wird, angepasste Analysedatensätze zu übermitteln. Weiterhin ist auch eine iterative Wiederholung einzelner Schritte oder Schrittfolgen denkbar.

Die Erfindung stellt damit ein computer-implementiertes Verfahren zur Analyse von Messdaten bereit, das reale Trainingsdaten für einen lernfähigen Algorithmus zum Durchführen der Analyseaufgabe generiert. Durch das Trainieren des lernfähigen Algorithmus mit den realen Trainingsdaten aus laufenden Messungen, kann der trainierte lernfähige Algorithmus gegenüber einer manuellen Überwachung von konventionellen Analysealgorithmen auf lange Sicht Zeit sparen, da weniger unklare Fälle dem Benutzer vorgelegt werden. Weiter wird durch den geringeren Aufwand für den Benutzer die Fehleranfälligkeit reduziert.

Das Ermitteln von Analysedatensätzen aus den Messdaten für die Objekte wird mittels eines vom lernfähigen Algorithmus verschiedenen Bewertungsalgorithmus ausgeführt, wobei das Verfahren zusätzlich den folgenden Schritt aufweist: Ersetzen des Bewertungsalgorithmus durch den lernfähigen Algorithmus, nachdem eine vordefinierte minimale Anzahl von angepassten Analysedatensätzen an den lernfähigen Algorithmus übermittelt wurde und/oder nachdem eine vordefinierte minimale Anzahl von Analysedatensätzen ermittelt wurde.

Damit wird bewirkt, dass zunächst ein Bewertungsalgorithmus die Analysedatensätze ermittelt. Der lernfähige Algorithmus erhält durch die von einem Benutzer überprüften Analysedatensätze des Bewertungsalgorithmus Trainingsdaten, um sich selbst zu ändern. Weiter wird der lernfähige Algorithmus erst dann zum Ermitteln der Analysedatensätze eingesetzt, wenn er eine vordefinierte minimale Anzahl von angepassten Analysedatensätzen als Grundlage für die Änderungen an sich selbst erhalten hat. Die vordefinierte minimale Anzahl kann dabei durch eine Abschätzung so gewählt werden, dass der lernfähige Algorithmus nach dem Training mit der vordefinierten minimalen Anzahl an Analysedatensätzen weniger Analyseergebnis produziert, die eine Überprüfung oder Berichtigung durch den Benutzer erfordern als der Bewertungsalgorithmus. Alternativ kann der lernfähige Algorithmus den Bewertungsalgorithmus ersetzen, sobald eine vordefinierte minimale Anzahl von Analysedatensätze ermittelt wurde. Die vordefinierte minimale Anzahl von Analysedatensätzen kann dabei auf einer Abschätzung über eine damit einhergehende Anzahl von Überprüfungen durch den Benutzer basieren. Beides erhöht die Effizienz des Trainings des lernfähigen Algorithmus und verringert während des Trainingsvorgangs des lernfähigen Algorithmus eine hohe Anzahl an Überprüfungen durch den Benutzer.

Gemäß einem weiteren Beispiel kann das Ermitteln von Analysedatensätzen aus den Messdaten für die Objekte mittels eines vom lernfähigen Algorithmus verschiedenen Bewertungsalgorithmus ausgeführt werden und das Verfahren nach dem Überprüfen der Analysedatensätze durch den Benutzer den nachfolgenden Schritt aufweisen: Ermitteln von Trainings-Analysedatensätzen aus den Messdaten für die Objekte mittels des lernfähigen Algorithmus; und Vergleichen der angepassten Analysedatensätze mit den entsprechenden Trainings-Analysedatensätzen vor dem Übermitteln der angepassten Analysedatensätze an den lernfähigen Algorithmus; wobei der Bewertungsalgorithmus durch den lernfähigen Algorithmus ersetzt wird, wenn mindestens ein Teil der angepassten Analysedatensätze mit den entsprechenden Trainings-Analysedatensätze übereinstimmt.

Damit werden durch den lernfähigen Algorithmus Trainings-Analysedatensätze aus den Messdaten ermittelt, bevor oder während der lernfähige Algorithmus durch die überprüften und angepassten Analysedatensätze trainiert wird. Die Trainings-Analysedatensätze dienen hierbei lediglich zum Vergleich mit den angepassten Analysedatensätzen und werden nicht für die Bewertung der Konformität der Objekte mit dem Soll-Zustand verwendet. Der lernfähige Algorithmus ersetzt erst dann den konventionellen Bewertungsalgorithmus bei der Ermittlung der Analysedatensätze, wenn der Vergleich zwischen den Trainings-Analysedatensätzen mit den Analysedatensätzen des Bewertungsalgorithmus eine genügend große Übereinstimmung zwischen den Trainings-Analysedatensätzen des lernfähigen Algorithmus und den Analysedatensätzen des Bewertungsalgorithmus ergibt. Hierbei kann auch die Übereinstimmung des konventionellen Bewertungsalgorithmus und den Trainings-Datensätzen berücksichtigt bzw. als Referenz genutzt werden, um einen geeigneten Zeitpunkt ermitteln zu können, an welchem der lernfähige Algorithmus denn konventionellen Bewertungsalgorithmus ersetzt.

Nach einer weiteren beispielhaften Ausführungsform kann vorgesehen sein, dass das Verfahren zusätzlich den Schritt aufweist: Bereitstellen der angepassten Analysedatensätze für die zugeordneten Objekte über eine Ausgabeeinheit.

Damit werden die von dem Benutzer angepassten Analysedatensätze über eine Ausgabeeinheit direkt als finales Ergebnis der Analyse ausgegeben. Die angepassten Analysedatensätze werden damit zum einen für die Verbesserung des lernfähigen Algorithmus und zum anderen als finales Ergebnis der Qualitätssicherung genutzt.

Vorteilhaft kann ebenfalls sein, dass das Verfahren vor dem Überprüfen der Analysedatensätze durch einen Benutzer den nachfolgenden Schritt aufweist: Markieren eines Analysedatensatzes, wenn mindestens ein Analyseergebnis über die Konformität des zugeordneten Objekts mit dem Soll-Zustand nicht eindeutig ist; und Verwenden lediglich der markierten Analysedatensätze beim Überprüfen der Analysedatensätze durch den Benutzer.

Dem Benutzer werden damit nur unsichere Analyseergebnisse zur Prüfung vorgelegt, d. h. Analyseergebnisse, die von dem Verfahren als nicht eindeutig in Ordnung oder als nicht eindeutig nicht in Ordnung eingestuft werden. Als sicher eingestufte Analyseergebnisse werden damit nicht durch den Benutzer überprüft. Dies reduziert den Aufwand und erhöht die Geschwindigkeit des Verfahrens. Die Einstufung als unsicheres Analyseergebnis kann z. B. einen dreigeteilten Toleranzbereich bewirkt werden. Je ein Toleranzbereich umfasst Analyseergebnisse, die als in Ordnung bzw. nicht in Ordnung eingestuft werden. Zwischen diesen beiden Toleranzbereichen ist ein dritter Toleranzbereich angeordnet, in dem das Verfahren keine klare Bewertung durchführen kann. Diese Analysedatensätze, mit einem Analyseergebnis, das in den dritten Toleranzbereich eingeordnet wurde, werden manuell durch den Benutzer geprüft. Alternativ kann vorgesehen sein, dass das Verfahren eine Ausgangsgröße angibt mittels der die Konformität des zugeordneten Objekts geprüft wird. Die Ausgangsgröße kann dabei angeben, wie stark die untersuchte Struktur einem gesuchten Muster ähnelt, das z. B. ein problematischer Defekt sein kann. So kann diese Ausgangsgröße je nach Definition z. B. 1 betragen, wenn es sich sicher um einen problematischen Defekt handelt. Bei einem Wert von 0 wäre es sicher kein problematischer Defekt. Bei einem Wert von 0,5 wäre die Entscheidung somit sehr unsicher. Implizit kann auf diese Weise dementsprechend ein Maß für die Unsicherheit abgeleitet werden. Weiter kann für die Einstufung alternativ vorgesehen sein, dass ein unabhängiges, dediziertes Unsicherheitsmaß ausgegeben wird. Dabei kann das Unsicherheitsmaß beispielsweise von einem konventionellen Algorithmus oder von einem weiteren lernfähigen Algorithmus ausgegeben werden. Ein einfaches Beispiel wäre die Angabe eines Signal-Rausch-Verhältnisses. Je stärker die Daten verrauscht sind, desto unsicherer sind die Analyseergebnisse. Bei dem weiteren lernfähigen Algorithmus kann es sich dabei um eine von der Berechnung des eigentlichen Analyseergebnisses separaten lernfähigen Algorithmus handeln, oder aber auch um einen kombinierten lernfähigen Algorithmus, welcher sowohl das Analyseergebnis als auch eine zugehörige Unsicherheit ermittelt.

Die Messdaten können mindestens eine Teildarstellung eines innerhalb eines Objekts angeordneten Volumens bereitstellen.

Damit kann das Innere eines Objektes analysiert werden. Abweichungen vom Soll-Zustand im Inneren des Objekts, die die Funktionsfähigkeit des Objekts beeinflussen, können damit erkannt werden. Die Analyse kann auf Grundlage von volumetrischen Daten beziehungsweise Volumendaten durchgeführt werden. In einem weiteren Beispiel können andere Daten, welche das Innere des Objektes abbilden, wie beispielsweise zweidimensionale Durchstrahlungsbilder bzw. Radiographien, analysiert werden.

Das Ermitteln von Messdaten einer Vielzahl von Objekten kann weiter den nachfolgenden Schritt aufweisen: Bereitstellen von Volumendaten mittels einer computertomographischen Messung.

Mittels der computertomographischen Messung können aussagekräftige Volumendaten hoher Auflösung auf effiziente Weise bereitgestellt werden. Die bereitgestellten Volumendaten erfassen die Struktur des Objekts in seiner Gesamtheit, so dass Abweichungen im Volumen und an der Oberfläche des Objektes erfasst werden können.

Weiter kann es von Vorteil sein, dass das Ermitteln von Messdaten einer Vielzahl von Objekten den nachfolgenden Schritt aufweist: Bereitstellen von Volumendaten als Messdaten mittels Prozessdaten einer Messung während einer additiven Fertigung eines Objekts.

Damit kann während der Herstellung des Objektes direkt aus den Prozessdaten einer Messung der Aufbau der inneren Struktur des Objekts ermittelt werden. Die Prozessdaten können hierbei ortsaufgelöste Informationen über physikalische Größen sein, beispielsweise der von dem Objekt reflektierte Anteil einer Laserleistung, während ein Volumenelement des Objekts gefertigt wird. Unmittelbar nach oder sogar während der Fertigstellung des Objekts können diese Daten der Analyse auf Abweichungen vom Soll-Zustand zugeführt werden, d. h. die Analysedatensätze können unmittelbar ermittelt werden. Da sich Defekte in diesen Daten vergleichsweise komplex manifestieren, existieren bisher lediglich wenige für derartige automatische Analysen geeignete Algorithmen, wobei regelmäßig eine große Anzahl von Analysedatensätzen durch einen Benutzer geprüft werden musste. Durch das Anlernen und Verwenden des lernfähigen Algorithmus, kann die Anzahl der von einem Benutzer zu überprüfenden Analysedatensätze verringert werden.

Das Ermitteln von Analysedatensätzen aus den Messdaten für die Objekte kann den nachfolgenden Schritt aufweisen: Bewerten von Abweichungen im Inneren des Objekts.

Wenn die Messdaten auf eine Abweichung im Inneren des Objekts schließen lassen, kann die Abweichung im Rahmen des Ermittelns eines Analyseergebnisses in Bezug auf die Funktionsfähigkeit des Objekts bewertet werden. Abweichungen bzw. Defekte, die die Funktionsfähigkeit des Objektes nicht beeinflussen, können z. B. als irrelevant beurteilt werden, und das Analyseergebnis positiv ausfallen, d. h. anzeigen, dass das in Bezug auf diese Analyse das Objekt in Ordnung ist. Andernfalls kann der Defekt als relevant beurteilt werden und das Analyseergebnis anzeigen, dass das Objekt nicht in Ordnung ist.

Die Defekte bzw. Abweichungen vom Soll-Zustand des Objekts können zum Beispiel Lufteinschlüsse sein, welche verschiedenste Formen, Größen, Positionen und andere Eigenschaften aufweisen können und die Funktionsfähigkeit des Objektes negativ beeinflussen können.

Weiter kann das Ermitteln von Analysedatensätzen aus den Messdaten für die Objekte vor dem Bewerten von Abweichungen im Inneren des Objekts den nachfolgenden Schritt aufweisen: Bestimmen von Segmentierungsdaten basierend auf den Messdaten, wobei die Segmentierungsdaten eine innere Zusammensetzung des Objekts beschreiben; wobei das Bewerten von Abweichungen im Inneren des Objekts auf Basis der Segmentierungsdaten mittels des lernfähigen Algorithmus durchgeführt wird.

Damit kann die Geometrie der einzelnen Defekte bzw. Abweichungen gemessen werden. Es wird daher nicht lediglich auf das Vorhandensein eines Defekts geprüft, sondern zusätzlich auch noch dessen Form ermittelt. Dies kann sowohl auf Voxel-Basis als auch subvoxelgenau durchgeführt werden. Der lernfähige Algorithmus erhält damit Trainings-Daten mit zusätzlichen Parametern zu den Abweichungen auf deren Grundlage ein Analyseergebnis und eine entsprechende Änderung des lernfähigen Algorithmus durchgeführt werden kann. Die Segmentierungsdaten, welche beispielsweise durch einen separaten Segmentierungsalgorithmus ermittelt werden können, können hierbei die Zusammensetzung des Objekts beschreiben, indem ortsaufgelöste Informationen bereitgestellt werden, ob sich in einem Bereich beziehungsweise Volumenelement Material, Luft oder Defekte befinden. Der Segmentierungsalgorithmus kann hierbei ebenfalls ein lernfähiger Algorithmus sein, welcher beispielsweise mit Hilfe von Simulationen trainiert wurde.

Weiter kann das Ermitteln von Analysedatensätzen aus den Messdaten für die Objekte vor dem Bewerten von Abweichungen im Inneren des Objekts den nachfolgenden Schritt aufweisen: Ermitteln einer lokalen Wandstärke an einer Position einer Abweichung; wobei das Bewerten von Abweichungen im Inneren des Objekts auf Basis der lokalen Wandstärke durchgeführt wird.

Abweichungen bzw. Defekte im Inneren eines Objekts schwächen i. d. R. die innere Struktur des Objekts. Bei gleicher Größe eines Defekt kann dieser eine stärkere Auswirkungen auf die Funktionsfähigkeit des Objekts haben, wenn sich dieser in einem Bereich kleiner Wandstärke befindet, als wenn sich der Defekt in einem Bereich größerer Wandstärke befindet. Auf dieser Basis kann der Einfluss eines Defekts auf die Funktionsfähigkeit eines Objekts u. a. auf Basis der Wandstärke erfolgen.

Vorteilhafterweise weist das Übermitteln wenigstens der angepassten Analysedatensätze an den lernfähigen Algorithmus, wobei der lernfähige Algorithmus sich selbst auf Basis der angepassten Analysedatensätze ändert, den nachfolgenden Schritt auf: Übermitteln von simulierten Analysedatensätzen, die auf simulierten Messdaten basieren, an den lernfähigen Algorithmus, wobei der lernfähige Algorithmus sich selbst auf Basis der simulierten Analysedatensätze ändert.

Mittels Simulation kann der gesamte Messvorgang, beispielsweise bei der Computertomographie bestehend aus der Durchstrahlung des Objekts, der Rekonstruktion und der Messdatenauswertung, realitätsgetreu nachgebildet werden. Mittels der Simulation von Analysedatensätzen kann dem lernfähigen Algorithmus somit eine große Anzahl von Analysedatensätzen bereitgestellt werden, auf deren Basis sich der lernfähige Algorithmus anpassen kann. Vorteilhaft ist hierbei, dass die Eingangsparameter der Simulation und somit die Geometrie des Objekts bekannt sind, woraus eine Ground Truth für eine Konformitäts-Entscheidung automatisiert und somit ohne zusätzliche Nutzereingabe abgeleitet werden kann. Die simulierten Analysedatensätze können hierbei zusätzlich zu den durch reale Messungen erzeugten Analysedatensätzen verwendet werden. Damit muss nicht erst auf eine große Anzahl von Messungen während des laufenden Betriebs der Herstellung von Objekten gewartet werden, um den lernfähigen Algorithmus zu trainieren. Gerade bei einer geringen Anzahl von Abweichungen vom Soll-Zustand im Herstellungsprozess kann das Ansammeln von geeigneten Analysedatensätzen, mit denen der lernfähige Algorithmus sich ändern kann, einige Zeit in Anspruch nehmen. Der lernfähige Algorithmus kann damit mittels der simulierten Analysedatensätze schneller zu einem Zustand gelangen, in dem er Abweichungen vom Soll-Zustand mit höherer Sicherheit erkennt als ein konventioneller nicht-lernfähiger Algorithmus.

In einer beispielhaften Ausführungsform kann das Verfahren vor dem Ermitteln von Analysedatensätzen aus den Messdaten für die Objekte, die nachfolgenden Schritte aufweisen: Ermitteln von vorläufigen Analysedatensätzen aus den Messdaten für die Objekte mittels eines Defekterkennungsalgorithmus, wobei ein vorläufiger Analysedatensatz einem der Objekte zugeordnet ist und mindestens ein Analyseergebnis über die Konformität des zugeordneten Objekts mit dem Soll-Zustand aufweist; Ermitteln mittels des Defekterkennungsalgorithmus, ob das Analyseergebnis eine Abweichung der Konformität des zugeordneten Objektes zu dem Soll-Zustand innerhalb eines vordefinierten Bereichs aufweist; Übermitteln der Messdaten der Objekte, deren vorläufige Analysedatensätze ein Analyseergebnis aufweisen, die eine Abweichung der Konformität des zugeordneten Objektes zu dem Soll-Zustand innerhalb der vordefinierten Bereichs aufweisen, an den lernfähigen Algorithmus zum Ermitteln von Analysedatensätzen aus den Messdaten für die Objekte.

In diesem Beispiel wird das Ermitteln von Analysedatensätzen aus den Messdaten für die Objekte, wobei ein Analysedatensatz einem der Objekte zugeordnet ist und mindestens ein Analyseergebnis über die Konformität des zugeordneten Objekts mit dem Soll-Zustand aufweist, mittels des lernfähigen Algorithmus durchgeführt. Mittels des Defekterkennungsalgorithmus, der in diesem Beispiel nicht dem lernfähigen Algorithmus entspricht, sondern ein konventioneller Algorithmus ist, können Messdaten, die eindeutig Abweichungen bzw. eindeutig keine Abweichungen vom Soll-Zustand anzeigen, vor dem Überprüfen der Messdaten durch den lernfähigen Algorithmus gefiltert werden, so dass der lernfähige Algorithmus lediglich Messdaten zu Objekten analysiert, die keine eindeutige Analyseergebnisse mittels des Defekterkennungsalgorithmus erlauben. Da der lernfähige Algorithmus i. d. R. mehr Rechenleistung bei der Ausführung benötigt als ein konventioneller nicht-lernfähiger Algorithmus, d. h. langsamer ist als der Defekterkennungsalgorithmus, kann das gesamte Verfahren beschleunigt werden, wenn bei eindeutigen Analyseergebnissen auf eine Analyse durch den lernfähigen Algorithmus verzichtet wird.

In einem alternativen oder zusätzlichen Beispiel können bereits durchgeführte Analysen, welche zu einem positiven Ergebnis geführt haben, nachdem der lernfähige Algorithmus sich selbst auf Basis der angepassten Analysedatensätze geändert hat, erneut durchgeführt werden und können so im Zweifelsfall im Nachhinein als nicht in Ordnung bzw. als uneindeutig kategorisiert werden. Auf diese Weise können im Nachhinein Objekte, welche fälschlicherweise als in Ordnung kategorisiert wurden, noch als nicht in Ordnung identifiziert oder dem Benutzer zur Entscheidung vorgelegt werden. Die bereits durchgeführten ersten Analysen werden somit als provisorisch angesehen, solange der lernfähige Algorithmus sich noch nicht so weit selbst geändert hat, dass dessen Entscheidungen eine akzeptabel geringe Fehlerrate aufweisen. Die akzeptablen Fehlerraten bzw. Fehlerquoten können durch einen Benutzer vordefiniert werden. Solange die Analyse als provisorisch angesehen wird, werden die entsprechenden Objekte noch nicht weiterverwendet, z. B. ausgeliefert oder weiterverarbeitet. Die neu durchgeführte, zweite Analyse durch den lernfähigen Algorithmus wird dem entsprechenden Analysedatensatz bzw. den entsprechenden Messdaten zugeordnet. Analog können auf diese Weise auch Objekte, welche fälschlicherweise als nicht in Ordnung kategorisiert wurden, auch im Nachhinein als in Ordnung identifiziert werden oder als uneindeutig angesehen und zur dem Benutzer zur Entscheidung vorgelegt werden. Auf diese Weise kann unnötiger Ausschuss minimiert werden.

Weiter kann alternativ oder zusätzlich vorgesehen sein, dass sämtliche Analysen als vorläufig betrachtet werden. Die Messdaten werden dabei gespeichert, bis der lernfähige Algorithmus eine akzeptabel geringe Fehlerquote erzielt. Danach werden alle Messdaten hinsichtlich ihrer Konformität neu analysiert und je nach Ergebnis erst daraufhin die entsprechenden Objekte klassifiziert und ggf. weiterverwendet.

In einem weiteren Beispiel werden die Analysedatensätze erzeugt, indem Defekte in den Messdaten hinsichtlich geometrischer Eigenschaften wie Größe, Form, Ausrichtung, Lage im Bauteil, aber auch die Nähe zu anderen Defekten untersucht und hieraus eine Aussage zur Konformität des Objekts abgeleitet wird.

Das Verfahren kann ebenfalls verwendet werden, um komplexere Geometrien wie Schaumstrukturen hinsichtlich der Konformität zu analysieren. Weiterhin können auf diese Weise auch Bilddaten von Objekten hinsichtlich des Vorhandenseins von Strukturen bzw. Geometrien untersucht werden. Beispiele hierfür können sein, ob eine benötigte Lötstelle nicht vorhanden ist oder ob eine Bestückung, z. B. einer Leiterplatte mit Bauelementen oder eines Steckers mit entsprechenden Steckverbindungen, korrekt bzw. dem gewünschten Soll-Zustand entsprechend durchgeführt wurde.

Weiter können dem Benutzer in einem weiteren Beispiel Stichproben der von dem lernfähigen Algorithmus ermittelten Analysedatensätze zur Beurteilung vorgelegt werden. Die Stichprobe kann zufällig ausgewählt sein oder gezielt Analysedatensätze aufweisen, die vergleichsweise klare Bewertungen umfasst. Die von dem Benutzer überprüften Analysedatensätze können dem lernfähigen Algorithmus vorgelegt werden, damit sich der lernfähige Algorithmus auf Basis dieser Analysedatensätze ändert. Auf diese Weise wird das Risiko minimiert, dass der lernfähige Algorithmus hinsichtlich bestimmter Merkmale fehlerhaft trainiert wird.

In einem weiteren Beispiel können Analysedatensätze von verschiedenen Mess-Systemen zusammengeführt werden, wobei der lernfähige Algorithmus die zusammengeführten Analysedatensätze nutzt, um sich auf deren Basis zu ändern. Das Zusammenführen der Analysedatensätze kann dabei beispielsweise durch verschiedene Nutzer erfolgen, wobei die Analysedatensätze z. B. mittels einer Netz-Anwendung an eine zentrale Stelle übermittelt werden. Hierbei wird im Idealfall gleiche oder ähnliche Messaufgaben mit gleichen oder ähnlichen Aufnahmeparametern untersucht.

Weiter kann beispielsweise vorgesehen sein, dass der lernfähige Algorithmus für unterschiedliche Bereiche des Objekts, in denen beispielsweise verschiedene Tolerierungen definiert sein können, separate Analysedatensätze erhält, um sich selbst auf deren Basis zu ändern.

Alternativ oder zusätzlich können für die unterschiedlichen Bereiche unterschiedliche lernfähige Algorithmen für die Analyse genutzt werden, d. h., dass die unterschiedlichen lernfähigen Algorithmen für einen bestimmten Bereich spezialisiert werden.

In einem weiteren Aspekt bezieht sich Erfindung auf ein Computerprogrammprodukt mit auf einem Computer ausführbaren Instruktionen, welche auf einem Computer ausgeführt den Computer dazu veranlassen, das Verfahren nach der vorangegangenen Beschreibung durchzuführen.

Dabei ergeben sich die Vorteile und Weiterbildungen des Computerprogrammprodukts aus der vorangegangenen Beschreibung.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Darstellung des computer-implementierten Verfahrens zur Analyse von Messdaten aus einer Messung eines Objektes,
- Fig. 2: eine schematische Darstellung eines Algorithmus nach dem Stand der Technik,
- Fig. 3: eine schematische Darstellung von Abweichungen in Messdaten eines Objekts,
- Fig. 4a, b: Flussdiagramme verschiedener Ausführungsbeispiele des Verfahrens,
- Fig. 5: ein Flussdiagramm eines Ausführungsbeispiels eines Verfahrensschritts, und
- Fig. 6: ein Teil-Flussdiagramm eines weiteren Ausführungsbeispiels des Verfahrens.

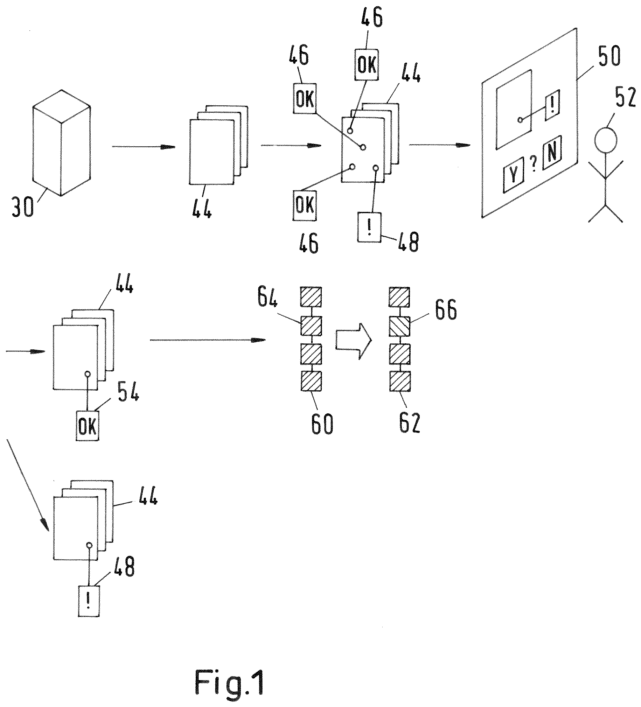

In Fig. 1 wird eine Ausführungsform des erfindungsgemäßen computer-implementierten Verfahrens dargestellt. Am Beispiel der Messung eines Objekts 30 wird der Ablauf des Verfahrens näher erläutert. Das Verfahren wird jedoch zum Messen und Analysieren einer Vielzahl von Objekten genutzt.

Das Objekt 30 wird im vorliegenden Beispiel mittels eines bildgebenden Verfahrens automatisch gemessen. Die Messung kann jedoch auch auf andere Weise, z. B. manuell erfolgen. Aus dem bildgebenden Verfahren resultieren Messdaten 44 des Objekts 30. Aus den Messdaten 44 wird mittels eines Algorithmus automatisiert ein Analysedatensatz erstellt, der dem Objekt 30 zugeordnet ist. Der Analysedatensatz umfasst Analyseergebnisse 46, 48 über die Konformität des zugeordneten Objekts 30 mit dem Soll-Zustand des Objekts 30. D.h., dass die Analyseergebnisse 46, 48 bewerten, ob die entsprechenden Messwerte, die in den jeweiligen Analysen beurteilt werden, innerhalb oder außerhalb von vordefinierten Toleranzbereichen liegen.

Die Analyseergebnisse 46 zeigen dabei an, dass die entsprechenden Analysen an bestimmten Positionen im Objekt 30 in Ordnung bzw. "OK" sind, d.h., dass sie innerhalb der vordefinierten Toleranzbereiche liegen. Das Analyseergebnis 48 ist mit einem "!" dargestellt, das anzeigt, dass das Analyseergebnis 48 überprüft werden muss. Dabei kann festgelegt sein, dass Analyseergebnisse überprüft werden, wenn sie ein Ergebnis außerhalb der vordefinierten Toleranzbereiche anzeigen, d.h. dass eine Analyse an einer bestimmten Position im Objekt 30 ergibt, dass das Objekt 30 an dieser Position nicht in Ordnung ist. Alternativ oder zusätzlich kann festgelegt sein, dass Analyseergebnisse überprüft werden, wenn sie als unsicheres Analyseergebnis gekennzeichnet sind, d.h. dass der Algorithmus nicht oder nicht mit benötigter Sicherheit feststellen kann, ob das Analyseergebnis als "in Ordnung" oder "nicht in Ordnung" bewertet wird.

Diejenigen Analysedatensätze, die Analyseergebnisse 48 aufweisen, die überprüft werden müssen, werden über eine Benutzerschnittstelle 50 einem Benutzer 52 vorgelegt. Die Benutzerschnittstelle 50 kann dabei zum Beispiel ein Monitor eines Computers oder ein Touchscreen sein, ist aber nicht auf diese Ausführungsbeispiele beschränkt.

Der Benutzer 52 überprüft, ob das Analyseergebnis 48 korrekt ist. Falls er mit dem Analyseergebnis 48 zufrieden ist, wird es nicht geändert. Weiter hat der Benutzer 52 die Möglichkeit, das Analyseergebnis 48 in ein angepasstes Analyseergebnis 54 zu ändern, falls er zu dem Ergebnis kommt, dass das Analyseergebnis 48 nicht korrekt ist.

Der angepasste Analysedatensatz mit dem angepassten Analyseergebnis 54 wird an den lernfähigen Algorithmus übermittelt. Dabei ändert der lernfähige Algorithmus seinen Zustand von einem Ausgangszustand 60 zu einem Änderungszustand 62. Der Übergang von dem Ausgangszustand 60 zu dem Änderungszustand 62 kann dabei beispielsweise durch die Änderung eines Schrittes 64 des Ausgangszustandes 60 des Algorithmus in einen Schritt 66 des Änderungszustandes 62 erfolgen. In dem Änderungszustand 62 ist der lernfähige Algorithmus gegenüber dem Ausgangszustand 60 verbessert und wird in zukünftigen Analysen, die eine dem angepassten Analysedatensatz zu Grunde liegende ähnliche Messaufgabe aufweisen, mit höherer Wahrscheinlichkeit ein Analyseergebnis 54 liefern, dass nicht durch einen Benutzer überprüft werden muss.

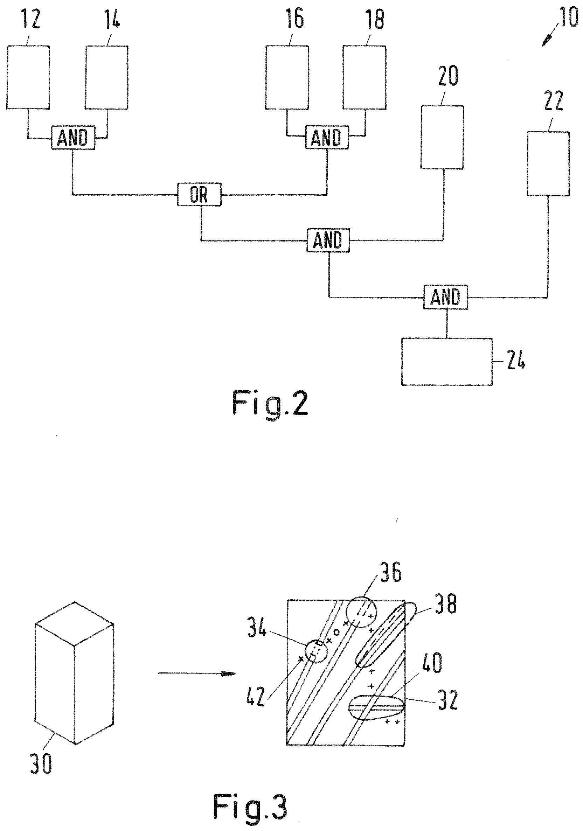

Das Ermitteln von Analysedatensätzen vor dem Überprüfen durch den Benutzer 52 kann mittels eines konventionellen Algorithmus nach dem Stand der Technik durchgeführt werden. Ein solcher konventioneller Algorithmus bewertet anhand vordefinierter Entscheidungskriterien, ob ein Objekt in Ordnung ist oder nicht. Ein Beispiel eines Entscheidungsbaums, der den Entscheidungen eines konventionellen Algorithmus zugrunde liegt, ist in Figur 2 dargestellt.

Der Entscheidungsbaum weist gemäß Figur 2 mehrere Bedingungen 12 bis 22 auf die entweder mit "UND"-Verknüpfungen oder "ODER"-Verknüpfungen miteinander verknüpft sind. So kann zum Beispiel die Bedingung 12 eine Wandstärke innerhalb einer vordefinierten Toleranz fordern. Weiter kann die Bedingung 14 beispielsweise eine Porengröße im Material des Objekts fordern die kleiner als 0,3 mm sind. Die Bedingungen 12 und 14 müssen dabei gleichzeitig erfüllt sein. Alternativ müssen die Bedingungen 16 und 18 gleichzeitig erfüllt sein, wobei die Bedingungen 16 fordert, dass die Wandstärke maximal 0,1 mm außerhalb der Toleranz liegt und gemäß Bedingung 18 keine Poren im Material vorhanden sind.

Zusätzlich muss Bedingung 20 erfüllt sein, die eine Abweichung zum einem CAD-Modell von weniger als 0,1 mm fordert. Weiter müssen alle weiteren Messergebnisse gemäß Bedingung 22 innerhalb der Toleranzen liegen.

Basierend auf diesem Entscheidungsbaum zeigt das Ergebnis 24 an, dass das Objekt 30 entweder in Ordnung oder nicht in Ordnung ist. Allerdings lässt sich diese auf Weise nicht unbedingt auf die Funktionsfähigkeit des Objektes schließen, da der Entscheidungsbaum die komplexen Zusammenhänge, welche die Funktionsfähigkeit beeinflussen, nicht ideal nachbilden kann. Um unnötigen Ausschuss eigentlich funktionsfähiger Objekte 30 zu vermeiden, sollte daher bei Abweichungen von dem Soll-Zustand des Objekts, wenn zum Beispiel als Ergebnis 24 angezeigt wird, dass das Objekt 30 nicht in Ordnung ist, eine Überprüfung durch den Benutzer durchgeführt werden. Weiter kann der Entscheidungsbaum auch so aufgebaut sein, dass das Ergebnis 24 anzeigt, dass die Entscheidung nicht klar getroffen werden kann und zwingend durch den Benutzer überprüft werden muss. Diese Entscheidungen können unter anderem jeweils für das Objekt 30 als Ganzes, aber auch für einzelne Defekte oder Bereiche im bzw. am Objekt 30 analysiert werden.

Ein Beispiel für Abweichungen von einem Soll-Zustand eines Objekts sind Defekte in Verbundfaserstoffen, die in Figur 3 dargestellt sind. Dabei ist ein Schnittbild 32 aus dem Volumen des Objektes 30 dargestellt, dass zum Beispiel ein auf Basis einer computertomographischen Messung ermittelt worden sein kann. So ist im Bereich 34 ein Faserbruch dargestellt, wobei die Faser in diesem Bereich getrennt wurde. In Bereich 36 ist ein Fehlstück einer Faser dargestellt.

Der Bereich, in dem vorher eine Faser vorhanden war, ist nun ein leerer Raum in dem Matrixmaterial, in dem die Fasern eingebettet sind. Die leeren Räume können Lufteinschlüsse sein. Im Bereich 38 ist die Verbindung zwischen der Faser und dem Matrixmaterial verloren gegangen, sodass sich ebenfalls eine Leerstelle im Matrixmaterial gebildet hat. Der Bereich 40 zeigt Brüche in der Struktur des Matrixmaterials.

Die Bereiche 34, 36, 38, 40 sind durch einen nachträglich aufgetretenen Bruch 42 verbunden, der quer durch das Schnittbild 32 verläuft. Der Bruch 42 kann eine Folge der Defekte in den Bereichen 34, 36, 38, 40 sein. Für sich genommen könnte jeder der Defekte in den Bereichen 34, 36, 38, 40 die Nutzungsfähigkeit des Objekts 30 nicht beeinträchtigen. In ihrer Summe jedoch führt in diesem Beispiel der Bruch 42 zu einer fehlenden Funktionsfähigkeit des Objekts 30. Die fehlende Funktionsfähigkeit des Objekts 30 wegen dem möglichen Auftreten eines Bruchs mit einem vordefinierten Entscheidungsbaum mit einem konventionellen Algorithmus abzubilden, kann bei leichten Abweichungen der Defekte in den analysierten Bereichen zu Fehlentscheidungen führen.

Dabei kann in einem alternativen oder zusätzlichen Beispiel lediglich analysieren, ob Leerstellen, bzw. Lufteinschlüsse im Material die Funktionsfähigkeit des Objekts 30 negativ beeinflussen. Dies vereinfacht und beschleunigt die Analyse. Das Material des Objekts 30 muss dabei nicht zwingend einen Verbundfaserstoff umfassen, sondern kann z. B. ein Kunststoff, ein Metall oder eine Keramik usw. sein, das Lufteinschlüsse aufweist.

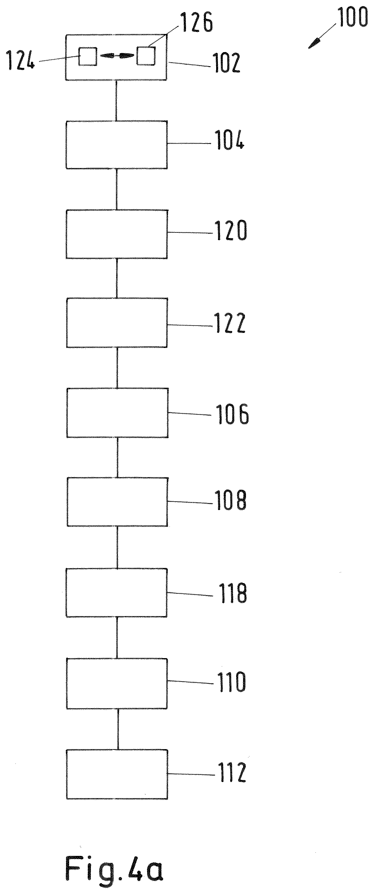

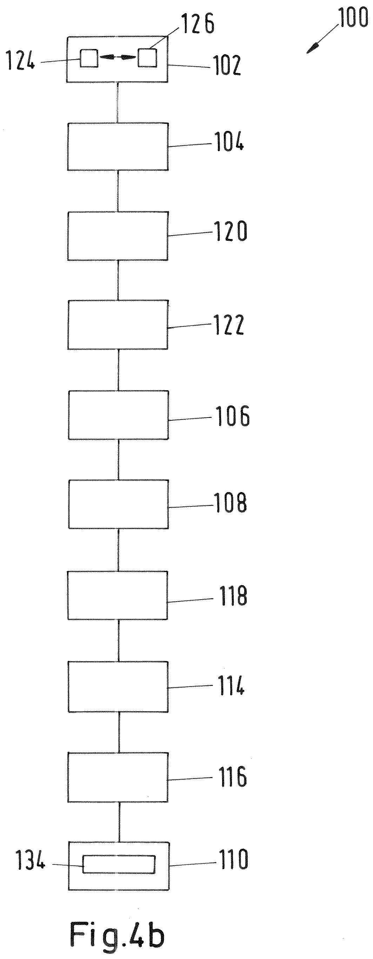

Das erfindungsgemäße computer-implementierte Verfahren 100, das einem lernfähigen Algorithmus realitätsgetreue durch einen Benutzer angepasste Analysedatensätze zur Verbesserung des lernfähigen Algorithmus zuführt, ist in den Figuren 4a und 4b dargestellt, die beispielhaft verschiedene Ausführungsformen des Verfahrens 100 zeigen.

Gemäß Figur 4a umfasst das Verfahren 100 in einem ersten Schritt 102 das Ermitteln von Messdaten einer Vielzahl von Objekten. Die Ermittlung der Messdaten kann dabei auf gleichartigen Messaufgaben basieren. Dabei wird eine große Anzahl von Objekten nacheinander oder gleichzeitig mittels gleicher oder ähnlicher Analysen und/oder gleicher oder ähnlicher Analyseziele vermessen. Die Ermittlung von Messdaten kann hierbei auch bedeuten, dass bereits durchgeführte Messungen von einem Speicher eingeladen werden. Messaufgaben am Beispiel von Verbundwerkstoffen können dabei zum Beispiel das Suchen von Leerstellen im Matrixmaterial, die durch Brüche, Faserverluste oder Faserablösungen von Matrixmaterial erzeugt wurden, aufweisen. Bei gegossenen oder durch additive Fertigungsverfahren hergestellten Objekten kann die Messaufgabe zum Beispiel das Auffinden von Lunkern oder Fremdmaterialeinschlüssen umfassen. Die Messaufgaben können jedoch noch weiter variieren und individuell auf ein Objekt bzw. ein Herstellungsverfahren des Objektes abgestimmt sein.

Die Messdaten können zum Beispiel Volumendaten sein, die mittels einer computertomographischen Messung ermittelt wurden. Die computertomographische Messung erfolgt dabei während des Schrittes 102 in einem Schritt 124 nach der Herstellung des Objekts.

Alternativ oder zusätzlich können bei einem additiven Fertigungsverfahren des Objekts für den Schritt 102 in einem Schritt 126 die während der Fertigung ermittelten Prozessdaten als Volumendaten bereitgestellt werden. Die Prozessdaten sind dabei direkt ortsaufgelöst vorhanden und stehen damit schon während der Herstellung des Objekts zur Verfügung. Damit können bereits während der Herstellung des Objekts Analysen für die bereits fertiggestellten Teile des Objekts durchgeführt werden.

In weiteren nicht dargestellten Beispielen des Ermittelns von Volumendaten können auch Messdaten aus Ultraschallverfahren, Magnetresonanztomographie und weiteren bildgebenden Verfahren genutzt werden.

Weiter sind die möglichen Analysen allerdings nicht auf Volumendaten beschränkt. So können Abweichungen von der Konformität des Objekts mit dem Soll-Zustand auch durch zweidimensionale-Durchstrahlungsbilder, die beispielsweise mittels radiografischer Verfahren bereitgestellt werden, oder durch eine optische Inspektion von Objekten mittels Kamerabildern ermittelt werden.

In einem Schritt 104 werden aus den Messdaten für die Objekte Analysedatensätze ermittelt. Ein Analysedatensatz ist dabei einem der Objekte zugeordnet. Weiter weist jeder Analysedatensatz mindestens ein Analyseergebnis über die Konformität des zugeordneten Objekts mit dem Soll-Zustand des Objekts auf. Das Ermitteln der Analysedatensätze erfolgt automatisch mittels eines computer-implementierten Algorithmus. Dabei kann der computer-implementierte Algorithmus in einer ersten beispielhaften Ausführungsform der lernfähige Algorithmus sein, der in den weiteren Schritten trainiert und verbessert wird. In einer weiteren beispielhaften Ausführungsform kann das Ermitteln der Analysedatensätze durch einen konventionellen Algorithmus gemäß dem Stand der Technik durchgeführt werden.

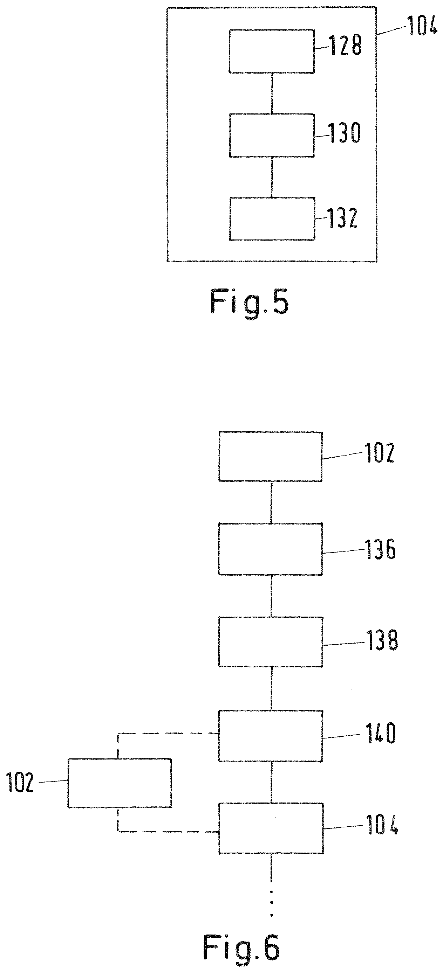

Gemäß Figur 5 kann in dem Schritt 104 der Schritt 128 vorgesehen werden, durch den Abweichungen vom Soll-Zustand im Inneren des Objektes bewertet werden. Diese Abweichungen können zum Beispiel Defekte sein. Die Messdaten zeigen in diesem Fall auch das Innere eines Objekts und nicht lediglich seine Oberflächen.

Optional kann weiter gemäß Figur 5 während Schritt 104 in einem weiteren Schritt 130 vorgesehen werden, dass basierend auf den Messdaten Segmentierungsdaten bestimmt werden. Die Segmentierungsdaten beschreiben dabei eine innere räumliche Zusammensetzung des Objekts. Weiter wird das Bewerten der Abweichungen im Inneren des Objekts auf Basis der Segmentierungsdaten mittels des lernfähigen Algorithmus durchgeführt. Aufgrund der Segmentierungsdaten können die Abweichungen in eine geometrische Form gebracht werden. D.h., dass die geometrische Form der Region, in der die Abweichung angeordnet ist, ermittelt werden kann.

Weiter kann gemäß Figur 5 optional im Schritt 104 der Schritt 132 vorgesehen werden. Dabei wird eine lokale Wandstärke an einer Position der Abweichung ermittelt. Das Bewerten von Abweichungen im Inneren des Objekts wird auf Basis der ermittelten lokalen Wandstärke durchgeführt. Das Bewerten kann dabei hinsichtlich der Funktionsfähigkeit des Objektes erfolgen.

In Figur 4a ist weiter der Schritt 120 dargestellt, in dem ein Analysedatensatz markiert wird, wenn der Analysedatensatz mindestens ein Analyseergebnis über die Konformität des zugeordneten Objekts mit dem Soll-Zustand aufweist, das nicht eindeutig ist. Lediglich die markierten Analysedatensätze werden in einem weiteren Schritt 122 verwendet, um sie in einem Schritt 106 zur Überprüfung dem Benutzer vorzulegen. Die Analysedatensätze können dabei mittels bekannter Techniken der Datenverarbeitung markiert werden. Durch das Markieren der zu prüfenden Analysedatensätze, werden dem Benutzer jeweils nur unsichere bzw. uneindeutige Analyseergebnisse zur Prüfung vorgelegt. Sichere Analyseergebnisse müssen durch den Benutzer damit nicht überprüft werden. Die Schritte 120 und 122 sind jedoch optional.

Weiter werden in dem Schritt 106 die Analyseergebnisse mindestens eines Teils der Analysedatensätze durch den Benutzer überprüft. Der Benutzer erhält die Gelegenheit, die automatisch ermittelten Analyseergebnisse zu prüfen. Dabei kann der Benutzer die Messdaten einsehen und die Analyseergebnisse entsprechend beurteilen. Je nach Ausführungsform werden dem Benutzer lediglich die markierten Analysedatensätze oder auch weitere Analysedatensätze wie zum Beispiel alle Analysedatensätze mit Analyseergebnissen, die negativ ausfallen, d.h. auch die eindeutigen Analyseergebnisse, vorgelegt.

Der Benutzer kann gemäß Schritt 108 ein Analyseergebnis in einem Analysedatensatz auf Basis der Messdaten anpassen, wenn er nicht mit dem Analyseergebnis übereinstimmt, d.h. wenn der Benutzer ein von dem ursprünglichen Analyseergebnis abweichendes Analyseergebnis über die Konformität des zugeordneten Objekts mit dem Soll-Zustand ermittelt. Dies resultiert dann in einen angepassten Analysedatensatz.

Die angepassten Analysedatensätze können gemäß Schritt 118 über eine Ausgabeeinheit bereitgestellt werden, und damit direkt als finales Ergebnis der Analyse ausgegeben werden. Die angepassten Analysedatensätze werden damit als finales Ergebnis der Qualitätssicherung genutzt.

Dabei werden im Schritt 110 die angepassten Analysedatensätze an den lernfähigen Algorithmus übermittelt. Der lernfähige Algorithmus ändert sich selbst auf Basis der angepassten Analysedatensätze. D.h., dass der lernfähige Algorithmus sich auf Basis der angepassten Analysedatensätze verbessert. Der verbesserte lernfähige Algorithmus kann Analysedatensätze aus weiteren Messdaten von Objekten ermitteln, die im Vergleich vor der Verbesserung weniger Überprüfungen durch einen Benutzer erfordern.

Wenn der lernfähige Algorithmus im Schritt 104 zum Ermitteln der Analysedatensätze aus den Messdaten für die Objekte verwendet wurde, wird durch die Kombination der Schritte 106 bis 110 eine direkte Verbesserung der Analyseergebnisse des lernfähigen Algorithmus bewirkt.

Wenn in einem alternativen Ausführungsbeispiel ein konventioneller Algorithmus im Schritt 104 die Analysedatensätze aus den Messdaten für die Objekte ermittelt, verbessert sich der lernfähige Algorithmus durch Schritt 110 im Vergleich zum konventionellen Algorithmus. In diesem Fall kann der konventionelle Algorithmus ein Bewertungsalgorithmus sein. Der konventionelle Algorithmus wird gemäß Schritt 112 durch den lernfähigen Algorithmus ersetzt, wenn eine vordefinierte minimale Anzahl von angepassten Analysedatensätzen an den lernfähigen Algorithmus übermittelt wurde und/oder nachdem eine vordefinierte minimale Anzahl von Analysedatensätzen durch den konventionellen Algorithmus ermittelt wurde.

Ein weiteres alternatives Ausführungsbeispiel des Verfahrens 100 ist in Figur 4b dargestellt. Anstatt des Schritts 112 nach Schritt 110 können die Schritte 114 und 116 vor oder nach Schritt 110 vorgesehen sein. In Figur 4b ist dabei lediglich die Durchführung der Schritte 114 und 116 vor Schritt 110 dargestellt, womit die Alternative nach Schritt 110 nicht ausgeschlossen wird. Für die weiteren Schritte, die vor den beiden Schritten 114 und 116 ausgeführt werden, gelten die oben angeführten Erläuterungen.

Im Schritt 114 werden durch den lernfähigen Algorithmus auf Basis der Messdaten Trainings-Analysedatensätze ermittelt. Diese Ermittlung von Trainings-Analysedatensätze gleicht dem Ermitteln von Analysedatensätzen gemäß Schritt 104. Die Trainings-Analysedatensätze werden jedoch nicht durch einen Benutzer überprüft und werden auch nicht für die Entscheidung über die Funktionsfähigkeit des Objektes verwendet.

Die angepassten Analysedatensätze, d.h. die von dem Benutzer überprüften und geänderten Analysedatensätze, werden im Schritt 116 mit den entsprechenden Trainings-Analysedatensätzen, die jeweils dem gleichen Objekt zugeordnet sind, vor dem Übermitteln der angepassten Analysedatensätze an den lernfähigen Algorithmus verglichen. Der Bewertungsalgorithmus im Schritt 104 wird ersetzt, sobald der lernfähige Algorithmus mindestens einige Trainings-Analysedatensätze ermittelt, die das gleiche Ergebnis aufweisen wie die angepassten Analysedatensätze. D.h. sobald der lernfähige Algorithmus weniger Analyseergebnisse, die eine Überprüfung durch den Benutzer erfordern, produziert als der konventionelle Algorithmus, wird der konventionelle Algorithmus gemäß Schritt 116 durch den lernfähigen Algorithmus ersetzt.

Optional kann Schritt 110 in allen Ausführungsbeispielen weiter den Schritt 134 aufweisen, wobei dem lernfähigen Algorithmus simulierte Analysedatensätze übermittelt werden. Der lernfähige Algorithmus ändert sich dabei auf Basis der simulierten Analysedatensätze selbst. Die simulierten Analysedatensätze basieren dabei auf simulierten Messdaten, die aus einer realitätsnahen Simulation resultieren.

In Figur 6 wird eine weitere beispielhafte Ausführungsform beschrieben, in der zwischen den Schritten 102 und 104 die Schritte 136, 138 und 140 durchgeführt werden.

Gemäß Schritt 136 werden nach dem Ermitteln der Messdaten vorläufige Analysedatensätze aus den Messdaten für die Objekte mittels eines Defekterkennungsalgorithmus ermittelt. Der Defekterkennungsalgorithmus kann ein konventioneller Algorithmus sein. Ein vorläufiger Analysedatensatz ist einem der Objekte zugeordnet und weist mindestens ein Analyseergebnis über die Konformität des zugeordneten Objekts mit dem Soll-Zustand auf.

Das vorläufige Analyseergebnis wird im Schritt 138 durch den Defekterkennungsalgorithmus darauf überprüft, ob es eine Abweichung der Konformität des zugeordneten Objektes zu dem Soll-Zustand innerhalb eines vordefinierten Bereichs aufweist. Der vordefinierte Bereich kann dabei Analyseergebnissen zugeordnet sein, die keine klare Bewertung über die Funktionalität des gemessenen zugeordneten Objekts erlauben.

Vorläufige Analyseergebnisse, die nicht dem vordefinierten Bereich zugeordnet werden, werden als finale Analyseergebnisse der Qualitätskontrolle ausgegeben. Wenn ein vorläufiges Analyseergebnis dem vordefinierten Bereich zugeordnet wird, werden die dem Analyseergebnis zugrunde liegenden Messdaten gemäß Schritt 140 an den lernfähigen Algorithmus übermittelt, der den Schritt 102 anstelle des Defekterkennungsalgorithmus wiederholt. Der aus dem lernfähigen Algorithmus resultierende Analysedatensatz wird dann als Ergebnis der Qualitätskontrolle ausgegeben, wenn keine Überprüfung durch den Benutzer nötig ist.

Das voranstehend beschriebene computer-implementierte Verfahren 100 kann weiter in einer beliebigen Ausführungsform durch einen Computer ausgeführt werden, der durch ein Computerprogrammprodukt gesteuert Instruktionen durchführt, die den Computer dazu veranlassen, das computer-implementierte Verfahren 100 durchzuführen.

Die vorangegangenen Schritte können nacheinander oder mit zumindest teilweise zeitlichem Überlapp durchgeführt werden, sofern die jeweiligen logischen Voraussetzungen für die Durchführung der Schritte gegeben sind.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 30: Objekt
- 32: Schnittbild
- 34: Bereich
- 36: Bereich
- 38: Bereich
- 40: Bereich
- 42: Bruch
- 44: Messdaten
- 46: Analyseergebnis
- 48: Analyseergebnis
- 50: Benutzerschnittstelle
- 52: Benutzer
- 54: angepasstes Analyseergebnis
- 60: Ausgangszustand
- 62: Änderungszustand
- 64: Schritt eines Algorithmus
- 66: geänderter Schritt eines Algorithmus

## Patentansprüche

1. Computer-implementiertes Verfahren zur Analyse von Messdaten aus einer zerstörungsfreien Messung eines Objektes zum Erfassen einer von außen nicht sichtbaren Struktur des Objekts, wobei die Analyse bewertet, ob das Objekt einem Soll-Zustand entspricht, wobei das Verfahren (100) die folgenden Schritte aufweist:
• Ermitteln (102) von Messdaten einer Vielzahl von Objekten;
• Automatisiertes Ermitteln (104) von Analysedatensätzen aus den Messdaten für die Objekte mittels eines von einem lernfähigen Algorithmus verschiedenen nicht-lernfähigen Bewertungsalgorithmus, wobei ein Analysedatensatz einem der Objekte zugeordnet ist und mindestens ein Analyseergebnis über die Konformität des zugeordneten Objekts mit dem Soll-Zustand aufweist;
• Überprüfen (106) der Analyseergebnisse mindestens eines Teils der Analysedatensätze durch einen Benutzer;
• Anpassen (108) eines Analyseergebnisses eines überprüften Analysedatensatzes, wenn das Überprüfen durch den Benutzer ein abweichendes Analyseergebnis über die Konformität des zugeordneten Objekts mit dem Soll-Zustand ergibt; und
• Übermitteln (110) wenigstens der angepassten Analysedatensätze an den lernfähigen Algorithmus, wobei der lernfähige Algorithmus sich selbst auf Basis der angepassten Analysedatensätze ändert, um Analysedatensätze mittels des geänderten lernfähigen Algorithmus aus weiteren Messdaten von Objekten zu ermitteln;
• wobei die Schritte nacheinander oder mit zumindest teilweiser zeitlicher Überlappung durchgeführt werden,
• Ersetzen (112) des Bewertungsalgorithmus durch den lernfähigen Algorithmus, nachdem eine vordefinierte minimale Anzahl von angepassten Analysedatensätzen an den lernfähigen Algorithmus übermittelt wurde und/oder nachdem eine vordefinierte minimale Anzahl von Analysedatensätzen ermittelt wurde.

2. Computer-implementiertes Verfahren nach Anspruch 1, **dadurch gekennzeichnet, dass** das Verfahren nach dem Überprüfen der Analysedatensätze durch den Benutzer den nachfolgenden Schritt aufweist:
• Ermitteln (114) von Trainings-Analysedatensätzen aus den Messdaten für die Objekte mittels des lernfähigen Algorithmus; und
• Vergleichen (116) der angepassten Analysedatensätze mit den entsprechenden Trainings-Analysedatensätzen vor dem Übermitteln der angepassten Analysedatensätze an den lernfähigen Algorithmus;
wobei der Bewertungsalgorithmus durch den lernfähigen Algorithmus ersetzt wird, wenn mindestens ein Teil der angepassten Analysedatensätze mit den entsprechenden Trainings-Analysedatensätzen übereinstimmt.

3. Computer-implementiertes Verfahren nach einem der Ansprüche 1 oder 2, **dadurch gekennzeichnet, dass** das Verfahren zusätzlich den Schritt aufweist:
• Bereitstellen (118) der angepassten Analysedatensätze für die zugeordneten Objekte über eine Ausgabeeinheit.

4. Computer-implementiertes Verfahren nach einem der Ansprüche 1 bis 3, **dadurch gekennzeichnet, dass** das Verfahren vor dem Überprüfen der Analysedatensätze durch einen Benutzer den nachfolgenden Schritt aufweist:
• Markieren (120) eines Analysedatensatzes, wenn mindestens ein Analyseergebnis über die Konformität des zugeordneten Objekts mit dem Soll-Zustand nicht eindeutig ist; und
• Verwenden (122) lediglich der markierten Analysedatensätze beim Überprüfen der Analysedatensätze durch den Benutzer.

5. Computer-implementiertes Verfahren nach einem der Ansprüche 1 bis 4, **dadurch gekennzeichnet, dass** die Messdaten mindestens eine Teildarstellung eines innerhalb eines Objekts angeordneten Volumens bereitstellen.

6. Computer-implementiertes Verfahren nach einem der Ansprüche 1 bis 5, **dadurch gekennzeichnet, dass** das Ermitteln von Messdaten einer Vielzahl von Objekten den nachfolgenden Schritt aufweist:
• Bereitstellen (124) von Volumendaten als Messdaten mittels einer computertomographischen Messung.

7. Computer-implementiertes Verfahren nach einem der Ansprüche 1 bis 5, **dadurch gekennzeichnet, dass** das Ermitteln von Messdaten einer Vielzahl von Objekten den nachfolgenden Schritt aufweist:
• Bereitstellen (126) von Volumendaten als Messdaten mittels Prozessdaten einer Messung während einer additiven Fertigung eines Objekts.

8. Computer-implementiertes Verfahren nach einem der Ansprüche 1 bis 7, **dadurch gekennzeichnet, dass** das Ermitteln von Analysedatensätzen aus den Messdaten für die Objekte den nachfolgenden Schritt aufweist:
• Bewerten (128) von Abweichungen vom Soll-Zustand im Inneren des Objekts.

9. Computer-implementiertes Verfahren nach Anspruch 8, **dadurch gekennzeichnet, dass** die Abweichungen Lufteinschlüsse sind.

10. Computer-implementiertes Verfahren nach Anspruch 8 oder 9, **dadurch gekennzeichnet, dass** das Ermitteln von Analysedatensätzen aus den Messdaten für die Objekte vor dem Bewerten von Abweichungen im Inneren des Objekts den nachfolgenden Schritt aufweist:
• Bestimmen (130) von Segmentierungsdaten basierend auf den Messdaten, wobei die Segmentierungsdaten eine innere Zusammensetzung des Objekts beschreiben;
wobei das Bewerten von Abweichungen im Inneren des Objekts auf Basis der Segmentierungsdaten mittels des lernfähigen Algorithmus durchgeführt wird.

11. Computer-implementiertes Verfahren nach einem der Ansprüche 8 bis 10, **dadurch gekennzeichnet, dass** das Ermitteln von Analysedatensätzen aus den Messdaten für die Objekte vor dem Bewerten von Abweichungen im Inneren des Objekts den nachfolgenden Schritt aufweist:
• Ermitteln (132) einer lokalen Wandstärke an einer Position einer Abweichung;
wobei das Bewerten von Abweichungen im Inneren des Objekts auf Basis der lokalen Wandstärke durchgeführt wird.

12. Computer-implementiertes Verfahren nach einem der Ansprüche 1 bis 11, **dadurch gekennzeichnet, dass** das Übermitteln wenigstens der angepassten Analysedatensätze an den lernfähigen Algorithmus, wobei der lernfähige Algorithmus sich selbst auf Basis der angepassten Analysedatensätze ändert, den nachfolgenden Schritt aufweist:
• Übermitteln (134) von simulierten Analysedatensätzen, die auf simulierten Messdaten basieren, an den lernfähigen Algorithmus, wobei der lernfähige Algorithmus sich selbst auf Basis der simulierten Analysedatensätze ändert.

13. Computer-implementiertes Verfahren nach einem der Ansprüche 1 bis 12, **dadurch gekennzeichnet, dass** das Verfahren vor dem Ermitteln von Analysedatensätzen aus den Messdaten für die Objekte, die nachfolgenden Schritte aufweist:
• Ermitteln (136) von vorläufigen Analysedatensätzen aus den Messdaten für die Objekte mittels eines Defekterkennungsalgorithmus, wobei ein vorläufiger Analysedatensatz einem der Objekte zugeordnet ist und mindestens ein Analyseergebnis über die Konformität des zugeordneten Objekts mit dem Soll-Zustand aufweist;
• Ermitteln (138) mittels des Defekterkennungsalgorithmus, ob das Analyseergebnis eine Abweichung der Konformität des zugeordneten Objektes zu dem Soll-Zustand innerhalb eines vordefinierten Bereichs aufweist;
• Übermitteln (140) der Messdaten der Objekte, deren vorläufige Analysedatensätze ein Analyseergebnis aufweisen, die eine Abweichung der Konformität des zugeordneten Objektes zu dem Soll-Zustand innerhalb des vordefinierten Bereichs aufweisen, an den lernfähigen Algorithmus zum Ermitteln von Analysedatensätzen aus den Messdaten für die Objekte.

14. Computerprogramprodukt mit auf einem Computer ausführbaren Instruktionen, welche auf einem Computer ausgeführt den Computer dazu veranlassen, das Verfahren nach einem der vorhergehenden Ansprüche durchzuführen.

## Claims

1. Computer-implemented method for analysing measurement data from a non-destructive measurement of an object for capturing a structure of the object that is not visible from outside, wherein the analysis assesses whether the object corresponds to a target state, wherein the method (100) comprises the following steps:
determining (102) measurement data of a plurality of objects;
determining (104) analysis data sets from the measurement data for the objects in an automated manner by means of a non-adaptive assessment algorithm, which is different from an adaptive algorithm, wherein an analysis data set is assigned to one of the objects and has at least one analysis result about the conformity of the assigned object to the target state;
checking (106), by a user, the analysis results of at least some of the analysis data sets;
adapting (108) an analysis result of a checked analysis data set if the checking by the user yields a deviating analysis result about the conformity of the assigned object to the target state; and
communicating (110) at least the adapted analysis data sets to the adaptive algorithm, wherein the adaptive algorithm modifies itself on the basis of the adapted analysis data sets in order to determine analysis data sets from further measurement data of objects by means of the modified adaptive algorithm;
wherein the steps are carried out successively or with at least partial temporal overlap,
replacing (112) the assessment algorithm by the adaptive algorithm after a predefined minimum number of adapted analysis data sets have been communicated to the adaptive algorithm and/or after a predefined minimum number of analysis data sets have been determined.

2. Computer-implemented method according to Claim 1, **characterized in that** after the checking of the analysis data sets by the user the method comprises the following step:
determining (114) training analysis data sets from the measurement data for the objects by means of the adaptive algorithm; and
comparing (116) the adapted analysis data sets with the corresponding training analysis data sets before communicating the adapted analysis data sets to the adaptive algorithm;
wherein the assessment algorithm is replaced by the adaptive algorithm if at least some of the adapted analysis data sets match the corresponding training analysis data sets.

3. Computer-implemented method according to either of Claims 1 and 2, **characterized in that** the method additionally comprises the following step:
providing (118) the adapted analysis data sets for the assigned objects by way of an output unit.

4. Computer-implemented method according to any of Claims 1 to 3, **characterized in that** before the checking of the analysis data sets by a user the method comprises the following step:
marking (120) an analysis data set if at least one analysis result about the conformity of the assigned object to the target state is not unambiguous; and
using (122) only the marked analysis data sets during the checking of the analysis data sets by the user.

5. Computer-implemented method according to any of Claims 1 to 4, **characterized in that** the measurement data provide at least one partial representation of a volume arranged within an object.

6. Computer-implemented method according to any of Claims 1 to 5, **characterized in that** determining measurement data of a plurality of objects comprises the following step:
providing (124) volume data as measurement data by means of a measurement by computed tomography.

7. Computer-implemented method according to any of Claims 1 to 5, **characterized in that** determining measurement data of a plurality of objects comprises the following step:
providing (126) volume data as measurement data by means of process data of a measurement during additive manufacturing of an object.

8. Computer-implemented method according to any of Claims 1 to 7, **characterized in that** determining analysis data sets from the measurement data for the objects comprises the following step:
assessing (128) deviations from the target state in the interior of the object.

9. Computer-implemented method according to Claim 8, **characterized in that** the deviations are air inclusions.

10. Computer-implemented method according to Claim 8 or 9, **characterized in that** determining analysis data sets from the measurement data for the objects, before assessing deviations in the interior of the object, comprises the following step:
ascertaining (130) segmentation data on the basis of the measurement data, wherein the segmentation data describe an internal composition of the object;
wherein assessing deviations in the interior of the object is carried out on the basis of the segmentation data by means of the adaptive algorithm.

11. Computer-implemented method according to any of Claims 8 to 10, **characterized in that** determining analysis data sets from the measurement data for the objects, before assessing deviations in the interior of the object, comprises the following step:
determining (132) a local wall thickness at a position of a deviation;
wherein assessing deviations in the interior of the object is carried out on the basis of the local wall thickness.

12. Computer-implemented method according to any of Claims 1 to 11, **characterized in that** communicating at least the adapted analysis data sets to the adaptive algorithm, wherein the adaptive algorithm modifies itself on the basis of the adapted analysis data sets, comprises the following step:
communicating (134) simulated analysis data sets based on simulated measurement data to the adaptive algorithm, wherein the adaptive algorithm modifies itself on the basis of the simulated analysis data sets.

13. Computer-implemented method according to any of Claims 1 to 12, **characterized in that** before determining analysis data sets from the measurement data for the objects the method comprises the following steps:
determining (136) provisional analysis data sets from the measurement data for the objects by means of a defect recognition algorithm, wherein a provisional analysis data set is assigned to one of the objects and has at least one analysis result about the conformity of the assigned object to the target state;
determining (138), by means of the defect recognition algorithm, whether the analysis result has a deviation of the conformity of the assigned object to the target state within a predefined range;
communicating (140) the measurement data of the objects whose provisional analysis data sets have an analysis result having a deviation of the conformity of the assigned object to the target state within the predefined range to the adaptive algorithm for determining analysis data sets from the measurement data for the objects.

14. Computer program product comprising instructions which are executable on a computer and, when executed on a computer, cause the computer to carry out the method according to any of the preceding claims.

## Revendications

1. Procédé mis en œuvre par ordinateur pour analyser des données de mesure issues d'une mesure non destructive d'un objet afin de détecter une structure de l'objet qui n'est pas visible de l'extérieur, l'analyse évaluant si l'objet correspond à un état de consigne, le procédé (100) comprenant les étapes suivantes :
. la détermination (102) de données de mesure d'une pluralité d'objets ;
. la détermination automatisée (104) d'ensembles de données d'analyse à partir des données de mesure pour les objets au moyen d'un algorithme d'évaluation sans apprentissage, différent d'un algorithme apte à l'apprentissage, un ensemble de données d'analyse étant associé à l'un des objets et comprenant au moins un résultat d'analyse sur la conformité de l'objet associé à l'état de consigne ;
. la vérification (106) des résultats d'analyse d'au moins une partie des ensembles de données d'analyse par un utilisateur ;
. l'adaptation (108) d'un résultat d'analyse d'un ensemble de données d'analyse vérifié lorsque la vérification par l'utilisateur donne un résultat d'analyse divergent concernant la conformité de l'objet associé à l'état de consigne ; et
. la transmission (110) au moins des ensembles de données d'analyse adaptés à l'algorithme apte à l'apprentissage, l'algorithme apte à l'apprentissage se modifiant lui-même sur la base des ensembles de données d'analyse adaptés afin de déterminer des ensembles de données d'analyse à partir d'autres données de mesure d'objets au moyen de l'algorithme apte à l'apprentissage modifié ;
. les étapes étant exécutées successivement ou avec un chevauchement temporel au moins partiel,
. le remplacement (112) de l'algorithme d'évaluation par l'algorithme apte à l'apprentissage après qu'un nombre minimal prédéfini d'ensembles de données d'analyse adaptés a été transmis à l'algorithme apte à l'apprentissage et/ou après qu'un nombre minimal prédéfini d'ensembles de données d'analyse a été déterminé.

2. Procédé mis en œuvre par ordinateur selon la revendication 1, **caractérisé en ce que** le procédé comprend, après la vérification des ensembles de données d'analyse par l'utilisateur, les étapes suivantes :
. la détermination (114) d'ensembles de données d'analyse d'apprentissage à partir des données de mesure pour les objets au moyen de l'algorithme apte à l'apprentissage ; et
. la comparaison (116) des ensembles de données d'analyse adaptées avec les ensembles de données d'analyse d'apprentissage correspondants avant de transmettre les ensembles de données d'analyse adaptés à l'algorithme apte à l'apprentissage ;
l'algorithme d'évaluation étant remplacé par l'algorithme apte à l'apprentissage lorsqu'au moins une partie des ensembles de données d'analyse adaptés correspond aux ensembles de données d'analyse d'apprentissage correspondants.

3. Procédé mis en œuvre par ordinateur selon l'une des revendications 1 ou 2, **caractérisé en ce que** le procédé comprend en outre l'étape suivante :
. la fourniture (118) des ensembles de données d'analyse adaptés pour les objets associés, via une unité de sortie.

4. Procédé mis en œuvre par ordinateur selon l'une des revendications 1 à 3, **caractérisé en ce que** le procédé comprend, avant la vérification des ensembles de données d'analyse par un utilisateur, l'étape suivante :
. le marquage (120) d'un ensemble de données d'analyse si au moins un résultat d'analyse concernant la conformité de l'objet associé à l'état de consigne n'est pas clair ; et
. l'utilisation (122) d'uniquement les ensembles de données d'analyse marqués lors de la vérification par l'utilisateur des ensembles de données d'analyse.

5. Procédé mis en œuvre par ordinateur selon l'une des revendications 1 à 4, **caractérisé en ce que** les données de mesure fournissent au moins une représentation partielle d'un volume agencé à l'intérieur d'un objet.

6. Procédé mis en œuvre par ordinateur selon l'une des revendications 1 à 5, **caractérisé en ce que** la détermination de données de mesure d'une pluralité d'objets comprend l'étape suivante :
. la fourniture (124) de données de volume en tant que données de mesure au moyen d'une mesure par tomographie par ordinateur.

7. Procédé mis en œuvre par ordinateur selon l'une des revendications 1 à 5, **caractérisé en ce que** la détermination de données de mesure d'une pluralité d'objets comprend l'étape suivante :
. la fourniture (126) de données de volume en tant que données de mesure au moyen de données de processus d'une mesure pendant une fabrication additive d'un objet.

8. Procédé mis en œuvre par ordinateur selon l'une des revendications 1 à 7, **caractérisé en ce que** la détermination d'ensembles de données d'analyse à partir des données de mesure pour les objets comprend l'étape suivante :
. l'évaluation (128) d'écarts par rapport à l'état de consigne à l'intérieur de l'objet.

9. Procédé mis en œuvre par ordinateur selon la revendication 8, **caractérisé en ce que** les écarts sont des inclusions d'air.

10. Procédé mis en œuvre par ordinateur selon la revendication 8 ou la revendication 9, **caractérisé en ce que** la détermination d'ensembles de données d'analyse à partir des données de mesure pour les objets avant l'évaluation des écarts à l'intérieur de l'objet comprend l'étape suivante :
- la détermination (130) de données de segmentation sur la base des données de mesure, les données de segmentation décrivant une composition interne de l'objet ;
l'évaluation des écarts à l'intérieur de l'objet étant effectuée sur la base des données de segmentation au moyen de l'algorithme apte à l'apprentissage.

11. Procédé mis en œuvre par ordinateur selon l'une des revendications 8 à 10, **caractérisé en ce que** la détermination d'ensembles de données d'analyse à partir des données de mesure pour les objets avant l'évaluation d'écarts à l'intérieur de l'objet comprend l'étape suivante :
. la détermination (132) d'une épaisseur de paroi locale à une position d'un écart ;
l'évaluation des écarts à l'intérieur de l'objet étant effectuée sur la base de l'épaisseur de paroi locale.

12. Procédé mis en œuvre par ordinateur selon l'une des revendications 1 à 11, **caractérisé en ce que** la transmission desdits ensembles de données d'analyse adaptés à l'algorithme apte à l'apprentissage, l'algorithme apte à l'apprentissage se modifiant lui-même sur la base des ensembles de données d'analyse adaptés, comprend l'étape suivante :
. la transmission (134) d'ensembles de données d'analyse simulés basés sur des données de mesure simulées à l'algorithme apte à l'apprentissage, l'algorithme apte à l'apprentissage se modifiant lui-même sur la base des ensembles de données d'analyse simulés.

13. Procédé mis en œuvre par ordinateur selon l'une des revendications 1 à 12, **caractérisé en ce que** le procédé comprend, avant la détermination d'ensembles de données d'analyse à partir des données de mesure pour les objets, les étapes suivantes :
. la détermination (136) d'ensembles de données d'analyse provisoires à partir des données de mesure pour les objets au moyen d'un algorithme de détection de défauts, un ensemble de données d'analyse provisoire étant associé à l'un des objets et comprenant au moins un résultat d'analyse sur la conformité de l'objet associé à l'état de consigne ;
. la détermination (138) au moyen de l'algorithme de détection de défauts si le résultat d'analyse inclut un écart de conformité de l'objet associé par rapport à l'état de consigne dans une plage prédéfinie ;
. la transmission (140) des données de mesure des objets dont les ensembles de données d'analyse provisoires comprennent un résultat d'analyse qui présente un écart de conformité de l'objet associé par rapport à l'état de consigne à l'intérieur de la plage prédéfinie, à l'algorithme apte à l'apprentissage pour déterminer des ensembles de données d'analyse à partir des données de mesure pour les objets.

14. Produit de programme d'ordinateur comprenant des instructions exécutables sur un ordinateur qui, lorsqu'elles sont exécutées sur un ordinateur, amènent celui-ci à mettre en œuvre le procédé selon l'une des revendications précédentes.
